# EUROPEAN PATENT SPECIFICATION

(11) **EP 4 467 340 B1**
(45) Date of publication and mention of the grant of the patent: **01.04.2026**
(21) Application number: 24199551.3
(22) Date of filing: 11.10.2022
(51) Int. Cl.: B32B 41/00, B32B 37/12, B32B 7/12

(54) **METHOD OF MANUFACTURING A LAMINATED PACKAGING MATERIAL AND DEVICE FOR THE METHOD**
VERFAHREN ZUR HERSTELLUNG EINES LAMINIERTEN VERPACKUNGSMATERIALS UND VORRICHTUNG FÜR DAS VERFAHREN
PROCÉDÉ DE FABRICATION D'UN MATÉRIAU D'EMBALLAGE STRATIFIÉ ET DISPOSITIF POUR LE PROCÉDÉ

(30) Priority: 14.10.2021 EP 21202615
(43) Date of publication of application: 27.11.2024
(62) Divisional of application: 22200783.3
(73) Proprietor: Tetra Laval Holdings & Finance S.A., 1009 Pully (CH)
(72) Inventor: GYLLING, Jonas, 244 66 Furulund (SE); WIKNER, Jens, 21871 Tygelsjö (SE)
(74) Representative: Tetra Pak Patent Attorneys

(56) References cited:
- WO-A1-2015/193632
- DE-B4- 102014 107 048

## Description

### Technical Field

The invention relates to a method of manufacturing a laminated packaging material, from which a packaging container for packaging of liquid food products can be formed, and further to a device suitable to execute said method.

### Background Art

Packaging containers of the single use disposable type for liquid foods are often produced from a packaging laminate based on paperboard or carton. Such packaging containers are often used for packaging of liquid foods, such as milk or fruit juices, that are sold for long term ambient storage. The packaging material in such known packaging containers is typically a laminate, comprising a bulk or core layer of paper, paperboard or other cellulose-based material and outer liquid-tight layers of thermoplastics. In order to render the packaging container gas-tight, in particular oxygen gas-tight for the purpose of aseptic packaging, the laminate in these packaging containers normally comprises an additional barrier layer, for example an aluminum foil or any other film having barrier functions like polymer based and/or paper based films.

On the inside of the laminate, in other words the side intended to face the food contents filled-in a container produced from the laminate, there normally is an innermost layer, which is applied onto the barrier layer. Said innermost layer may be composed of one or several part layers, for example comprising heat sealable thermoplastic polymers, such as adhesive polymers and/or polyolefins. Also on the outside of the bulk layer, there is normally an outermost heat sealable polymer layer.

The packaging containers are generally produced by means of modern, highspeed packaging machines of the type that form, fill and seal packages from a web or from prefabricated blanks of packaging material. Packaging containers may thus be produced by reforming a web of the laminated packaging material into a tube by both of the longitudinal edges of the web being united to each other in an overlap joint created by welding together the inner- and outermost heat sealable thermoplastic polymer layers. The tube is filled with the intended liquid food product and is thereafter divided into individual packages by repeated transversal seals of the tube at a predetermined distance from each other below the level of the contents in the tube. The packages are separated from the tube by incisions along the transversal seals and are given the desired geometric configuration, normally parallelepipedic, by fold formation along prepared crease lines in the packaging material.

Packaging containers for sensitive liquid food, for example milk or juice, can also be produced from sheet-like blanks or prefabricated blanks of the laminated packaging material. From a tubular blank of the packaging laminate that is folded flat, packages are produced by first of all building the blank up to form an open tubular container capsule, of which one open end is closed off by means of folding and heat-sealing of integral end panels. A thus closed container capsule is filled with the food product in question, e.g. juice, through its open end, which is thereafter closed off by means of further folding and heat-sealing of corresponding integral end panels. An example of a packaging container produced from sheet-like and tubular blanks is the conventional so-called gable-top package. There are also packages of this type, which have a moulded top and/or screw cap made of plastic.

To gain access to the liquid food product contained by the packaging container, it is often required to penetrate the laminated packaging material, for example by a straw. Therefore, it has been well established in the related art to provide a premanufactured hole through at least some material of the laminated packaging material. With such a straw hole or other opening structures, the consumer will achieve convenient access the content of the packaging container after penetration of the remaining material. Such holes are for example provided by punching a hole in the bulk or core layer prior to lamination, therefore often referred to as pre-punched holes, and then the hole is covered on the inside and outside by the additional lamination layers.

As the creation of the pre-punched hole often takes place prior to a lamination process, in which liquid or viscous materials, such as molten layer materials or adhesives may be used, there is a need to prevent such materials from spreading in an uncontrolled manner via the hole. For example, if the bulk layer comprises the through hole and is to be applied to a substrate layer in a lamination process, any adhesive should only affect the lamination sides of the bulk layer and substrate layer, respectively. However, upon joining under a lamination pressure, such material might be squeezed through the hole and reach a side opposite a lamination side of the bulk layer. This may lead to further problems, such as the material adhering to lamination equipment arranged on that side.

For example, in the patent document WO 2015/193632 A1 a lamination station is suggested that separates a nip roller of the lamination station from a through hole comprised by a lamination layer by means of a non-adhesive belt. The belt is pressed onto an area at the hole, while said area is exerted to the lamination pressure. Thus, material from inside the hole is prevented from escaping and reaching the nip roller.

However, the suggested system lacks flexibility and efficiency, when it comes to alteration of the arrangement of the holes relative the nip roller, as it requires an interruption of the manufacturing process and re-adjustment of the system with regard to the arrangements of the belts.

There is thus a need for an improved method of manufacturing a laminated packaging material and respective manufacturing equipment.

### Summary

It is now an objective of the present invention to at least partly overcome one or more of the above-identified limitations of the prior art. In particular, the invention aims at providing a method of manufacturing a laminated packaging material, from which a packaging container for packaging of liquid food products can be formed, that allows for safe and efficient lamination of a bulk layer with a through hole to a substrate layer, wherein a liquid, viscous or formable adhesive or layer material may be used. It is in particular intended to safely prevent such material from affecting the lamination equipment.

To achieve these objectives, a method of manufacturing a laminated packaging material, from which a packaging container for packaging of liquid food products can be formed, is provided. The method of the invention comprises the following steps:
- Providing a bulk layer of paper or paperboard or other cellulose-based material with at least one through hole;
- Providing a substrate layer and an adhesive formed by or applied to a lamination side thereof;
- Positioning the bulk layer and the substrate layer so that the adhesive is facing a lamination side of the bulk layer and with said substrate layer being arranged in front of the at least one through hole;
- Joining the bulk layer and the substrate layer in a lamination unit, wherein a first lamination means, the substrate layer, the bulk layer and a second lamination means are kinematically arranged in the enumerate sequence and a lamination pressure is created between the first and second lamination means, and wherein at least one non-adhesive lamination means is kinematically arranged between the second lamination means and the bulk layer.

According to the invention, a position of the bulk layer and/or a position of said at least one non-adhesive lamination means is controlled so that the at least one through hole is covered by the at least one non-adhesive lamination means, at least as long as the lamination pressure is imposed on the at least one trough hole.

Herein, merely for the sake of a to-the-point description of the technical principles, it may be referred to features disclosed as "at least one" in the singular form, which is however not meant to bear any limiting character.

The method of the invention beneficially achieves that the through hole is safely sealed by the non-adhesive lamination means to prevent any material, such as adhesive, from proceeding via the through hole to the second lamination means. Since the relative position of the bulk layer and the non-adhesive lamination means is controlled, this effect can be achieved without any need of stopping the manufacturing process, for example to re-adjust the position of the non-adhesive lamination means. Thus, both the quality and productivity of the method of the invention are on a very high level.

The bulk layer and the substrate layer are generally joined in a lamination process, which may be a dry lamination or wet lamination process, for example. Preferably, the joining may be done in a dispersion and/or wet lamination process.

Controlling the position of the bulk layer and/or the position of said non-adhesive lamination means may refer to an open control loop or a closed control loop, preferably executed in real time. The position controlling may refer to any dimension required to describe a relative position of the through hole and the non-adhesive lamination means. If said non-adhesive lamination means and the through hole are, for example temporarily, meeting in plane-parallel planes in the lamination unit, such dimensions may comprise a lateral and/or longitudinal dimension of said planes. If said non-adhesive lamination means and the through hole are, for example temporarily, approaching each other in non-parallel planes, such dimensions may comprise a lateral and/or longitudinal dimension of each of said planes and may also comprise a vertical dimension in order to predict the position of the through hole relative the non-adhesive lamination means, when the lamination pressure is applied. Respective control techniques may use appropriate measures to process such two- or three dimensional data and, if required, also time data with regard to position-, speed- and/or acceleration values. A person skilled in the art will, enabled by the present disclosure, have sufficient technical knowledge to select from the above suggestions or any combination or extraction thereof, in order to assure that the through hole is safely covered by the non-adhesive lamination means to prevent adhesive material from proceeding via the through hole to the second lamination means.

The bulk layer and the substrate layer may be introduced to the lamination unit separately or as a pre-joined combined layer. Preferably, they are introduced separately and are brought into contact in the lamination unit. It shall be understood, that for example the through hole may be manufactured in preliminary steps of the method of the invention. The same applies to the application of the adhesive to the substrate layer or forming of the substrate layer. It is not technically essential but preferred, to run the method of the invention as a flow process. The bulk layer, the substrate layer or both said layers may comprise some liquid proof properties themselves. It is also possible and preferred to apply a further layer or further layers in subsequent steps of the method of the invention, for example liquid proof layers or an oxygen barrier, based on the generally know requirements for such laminated packaging materials.

The through hole may preferably serve as a hole to place a straw therein. The through hole may therefore comprise a suitable diameter, for example about 6 mm.

Preferably, the substrate layer may comprise a material such as paper, paperboard or other cellulose-based material, a polymer material or any combination thereof. In particular, it is preferred to provide a substrate layer comprising polyolefin.

The adhesive material is selectable among all materials known as suitable for such a lamination process, preferably for a wet lamination process. The material of the substrate layer may comprise adhesive properties itself, for example if the substrate layer comprises a polymer layer. The adhesive may also be applied to the substrate layer as additional material, for example as a polymer solution. The adhesive is at least applied in the area of the through hole in order to assure a liquid proof bonding in that area, for example if the through hole is penetrated by a straw. It is particularly preferred to apply the adhesive on the entire lamination side of the substrate layer to achieve a comprehensive bonding between the bulk layer and substrate layer in general.

Preferably, the lamination unit is a wet lamination unit to join the bulk layer and the substrate layer in a wet lamination process.

The term "kinematically arranged" does not mean that the first lamination means, the substrate layer, the bulk layer and a second lamination means are necessarily arranged in direct physical contact with each other in that sequence (though possible), but it means that the lamination pressure propagates in that sequence between the respective components. The same applies to the arrangement of the non-adhesive lamination means and the second lamination means, however with said bulk layer being in direct physical contact with the non-adhesive lamination means to seal the through hole against the adhesive on a side of the bulk layer opposite its lamination side. It is, however, preferred to arrange the above components in direct physical contact with each other in the following sequence: the first lamination means, the substrate layer, the bulk layer, the non-adhesive lamination means and the second lamination means. Thereby, the bulk layer may at least in sections be in direct contact with the second lamination means at the same time. This applies to those areas of the second lamination means, to which the non-adhesive lamination means is not extending. This is, because the non-adhesive lamination means does not necessarily separate the entire surface of the second lamination means from the bulk layer, but is preferably limited to the areas of the through hole.

The term "non-adhesive lamination means" refers to any technical means suitable to cover the through hole and prevent the adhesive from escaping the through hole on the side of the bulk layer opposite the lamination side or at least to prevent the adhesive possibly escaping the through hole on the side of the bulk layer opposite the lamination side from adhering to the second lamination means, with particular respect to the lamination pressure applied. Preferably, said non-adhesive lamination means may comprise a material such as polytetrafluoroethylene (PTFE), which is also known under the "TEFLON" ^{®} brand, or other materials comprising similar properties making it protective against adhesion.

In a preferred embodiment of the method of the invention, the bulk layer comprises a plurality of through holes and further, a plurality of non-adhesive lamination means are kinematically arranged between the second lamination means and the bulk layer, wherein the position of the bulk layer and/or the position of each non-adhesive lamination means is controlled so that each non-adhesive lamination means covers a trough hole at the respective position, at least as long as the lamination pressure is imposed on the respective trough hole.

This further increases the flexibility of the method of the invention. The through holes may for example be arranged in a line or a plurality of lines on the bulk layer. For example, each non-adhesive lamination means may be controlled according to the position of the through holes of one of these lines. The through holes of said lines may, at least in sections, be periodically or may not provide any periodicity. The through holes may be arranged in groups, randomly, equidistant or of varying distance and may vary in size and shape.

In a preferred embodiment of the method of the invention, each of the first and second lamination means comprises a lamination roller to transmit the lamination pressure and the position of the bulk layer and/or the position of the non-adhesive lamination means is at least controlled in a direction parallel the rotating axes of said lamination rollers. Said lamination rollers may comprise a nip roller and a chill roller, for example.

In a preferred embodiment of the method of the invention, the non-adhesive lamination means comprises a belt being non-adhesive, guided over the lamination roller comprised by the second lamination means.

Based on for example a cylinder-type of geometry of the lamination roller, controlling the movement of the belt along said geometry to change its position can be realized in a facilitated manner.

Preferably, one or more additional rollers are used, for example such as tensioning rollers, idling rollers, cooling rollers or storage rollers, with regard to any of the belt, the laminated packaging material or any additional materials used to manufacture the laminated packaging material from.

The belt may be driven by one or more of such additional rollers and/or the lamination roller of the second lamination means.

Using rollers for both, the second lamination means and for driving the belt, reduces the effort of synchronization of the movement of the belt and the materials for the laminated packaging material, for example when exposed to the lamination pressure.

Preferably, there are eight belts of the above described type arranged next to each other in the direction parallel the rotating axes of said lamination rollers. Preferably, each of the eight belts is moveable in a range of 30 cm in that direction. Preferably, the two outermost belts feature a larger width than the other belts arranged between them, which means the intermediate belts are narrower than the edge belts, respectively.

In a preferred embodiment of the method of the invention, the position of the belt in the direction parallel the rotating axes of said lamination rollers is controlled by an actuated guiding member that imposes a positioning force on the belt in the direction parallel the rotating axes of said lamination rollers.

If the belt is guided over the lamination roller, which may rotate at the same time, the positioning force can easily make the belt changing its position on the lamination roller.

For example, the belt itself can be driven by an electrical motor, which may also be used to create the positioning force. Preferably, there is at least one individually controlled actuator, such as an electrical motor for each belt. Further as an example, the actuated guiding member may comprise a guiding sleeve that guides the belt or there may be any other structure to transmit the positioning force. Said actuated guiding member, for example guiding sleeve, is preferably designed with respect to the fact that the belt might be driven in a direction transverse the direction of the positioning force, which may for example be a machine direction described below in more detail. For that reason, the actuated guiding member may comprise a bearing to compensate for a relative movement of the belt and the guiding structure.

Preferably, the actuated guiding member may have at least one or more guiding rollers, carried on an individual support, for each of the belt. Preferably, this support and so the actuated guiding member, is equipped with a dedicated motor to be driven in the direction of the positioning force and/or transverse the direction of the positioning force. All guiding members may individually be driven in the direction of the positioning force on a single slide or track. There may also be more than one slide or track to carry a group of guiding members and belts, respectively. There may also be more than one slide or track, each of them to carry one guiding member and belt, respectively.

In a preferred embodiment of the method of the invention, the method is a continuous or discontinuous flow process being run in a machine direction, and wherein the position of the bulk layer and/or the position of the non-adhesive lamination means is at least controlled in a direction transverse the machine direction.

The machine direction refers to the fact that the laminated packaging material is normally manufactured in a flow process that has a material feed direction, which is the machine direction in other words.

In a preferred embodiment of the method of the invention, after joining the bulk layer and the substrate layer, the laminated packaging material is lead via at least one subsequent roller comprising a non-adhesive lamination means that covers the through hole, as long as said subsequent roller is in contact with the through hole.

This non-adhesive lamination means of the subsequent roller may be designed and configured analogue the foregoing description and therefore may be controllable, as well, to assure that it matches the position of the through hole.

Based on this, it can be assured that for example an adhesive that has not yet achieved a sufficient degree of hardening, will not attach to the subsequent roller.

In a preferred embodiment of the method of the invention, a sensor detects a position of the through hole on the bulk layer and the position of the bulk layer and/or the position of the non-adhesive lamination means is controlled based on the detected position of the through hole.

This significantly increases the process stability and the flexibility of the method of the invention, with regard to altering positions of the through holes.

In the method of the invention, the non-adhesive lamination means is cleaned by a cleaning device before and/or after having contacted the through hole. Preferably, the cleaning device is arranged at a location where the non-adhesive lamination means, for example the belt, has passed the first and second lamination means. As a result, the non-adhesive lamination means is cleaned by the cleaning device after the non-adhesive lamination means has passed the first and second lamination means. In one embodiment, the cleaning device is located behind the nip roller where the belt exits a nip defined by the nip roller.

By the cleaning device, it is assured that any impurity or unavoidable residua of adhesive material applied to the non-adhesive lamination means is removed before the non-adhesive lamination means is again brought in contact with the bulk layer and the second lamination means. Based on that, it is particularly preferred to combine the cleaning device with a wet lamination process.

The cleaning device may preferably be combined with the actuated guiding member. For example, such a cleaning device may be combined with a guiding sleeve for the belt. Preferably, the guiding sleeve comprises the cleaning device that cleans the belt, when the belt is driven transverse the direction of the positioning force, for example towards the second lamination means, in a particular example in the machine direction.

The cleaning device may have a scraper or similar structure to scrape off any excess adhesive that may be left on the non-adhesive lamination means, preferably the belt. As a result, any excess adhesive that may be left on the non-adhesive lamination means is scraped off by a scraper of the cleaning device. Further, there may be a collection container to collect excess adhesive, in particular scraped off adhesive. As a result, the excess adhesive is collected to a collection container of the cleaning device.

Further, the non-adhesive lamination means, preferably the belt, may be exposed to a cleaning bath, for example dipped into the cleaning bath. The cleaning bath preferably comprises water and alcohol. Mostly preferred, the cleaning bath is applied after the scraper has been used.

After the cleaning bath, the non-adhesive lamination means, preferably the belt, is dried. The drying is preferably done by suitable heat treatment means.

In a preferred embodiment of the method of the invention, after joining the bulk layer and the substrate layer at least one additional layer is applied to the laminated packaging material, comprising an innermost liquid tight layer, to be in direct contact with the food product to be contained by a packaging container formable from the packaging material and/or an outermost liquid tight layer, suitable to constitute the outside of the packaging container.

Based on the target product, in particular a packaging container for liquid food products, other layers such as an oxygen barrier may also be applied as additional layers.

Another aspect , not according to the claimed invention, refers to a laminated packaging material, manufactured in an inventive method according to the present disclosure.

Yet another aspect, not according to the claimed invention, refers to a packaging container comprising an inventive laminated packaging material according to the present disclosure.

Yet another aspect of the invention refers to a device for manufacturing a laminated packaging material, from which a packaging container for packaging of liquid food products can be formed, the device comprising a lamination unit configured to receive a bulk layer with at least one through hole and a substrate layer with an adhesive formed by or applied to a lamination side thereof, wherein said lamination unit comprises a first lamination means and a second lamination means configured to form a lamination cavity there between and to impose a lamination pressure on the bulk layer and the substrate layer, if said layers are introduced to said lamination cavity, and wherein the lamination unit further comprises at least one non-adhesive lamination means kinematically arranged between the second lamination means and the bulk layer, if introduced to the lamination cavity.

According to the invention, a position of the bulk layer and/or a position of said at least one non-adhesive lamination means is controllable so that the at least one through hole is covered by the at least one non-adhesive lamination means, at least as long the lamination pressure is imposed on the at least one trough hole and the device comprises a cleaning device which is configured to clean the non-adhesive lamination means before and/or after having contacted the through hole.

In a preferred embodiment of the device of the invention, the device is adapted and can be configured to execute an inventive method according to the present disclosure. Even more preferred, the device of the invention is configured to execute the inventive method.

Based on that, all equipment related features disclosed with regard to the inventive method are also disclosed herein as analogue features in possible embodiments of the device of the invention. The same applies the other way around, with regard to method related features disclosed with regard to the inventive device.

Preferably, the lamination unit of the device of the invention is a wet lamination unit.

Preferably, the device of the invention comprises a sensor that can be configured to detect a position of the through hole on the bulk layer, and wherein the position of the bulk layer and/or the position of the non-adhesive lamination means is controllable based on the detected position of the through hole. Even more preferred, the sensor is configured in that manner.

In a preferred embodiment of the device of the invention, the device is configured to manufacture the laminated packaging material in a continuous or discontinuous flow process being run in a machine direction, and wherein the position of the bulk layer and/or the position of the non-adhesive lamination means is at least controllable in a direction transverse the machine direction.

Still other objectives, features, aspects and advantages of the invention will appear from the following detailed description as well as from the drawings.

### Brief Description of the Drawings

Embodiments of the invention will now be described, by way of example, with reference to the accompanying schematic drawings, in which
Fig. 1 shows an embodiment of a packaging container for packaging of liquid food products;
Fig. 2 shows an embodiment of a laminated packaging material, from which a packaging container can be formed, in a cross-sectional view;
Figs. 3-4 show embodiments of a method of manufacturing a laminated packaging material with reference to a device for manufacturing a laminated packaging material;
Fig. 5 shows an alternative embodiment of the device shown in Fig. 4, in particular with regard to a different design of the slide; and
Fig. 6 shows an embodiment of a cleaning device.

### Detailed description

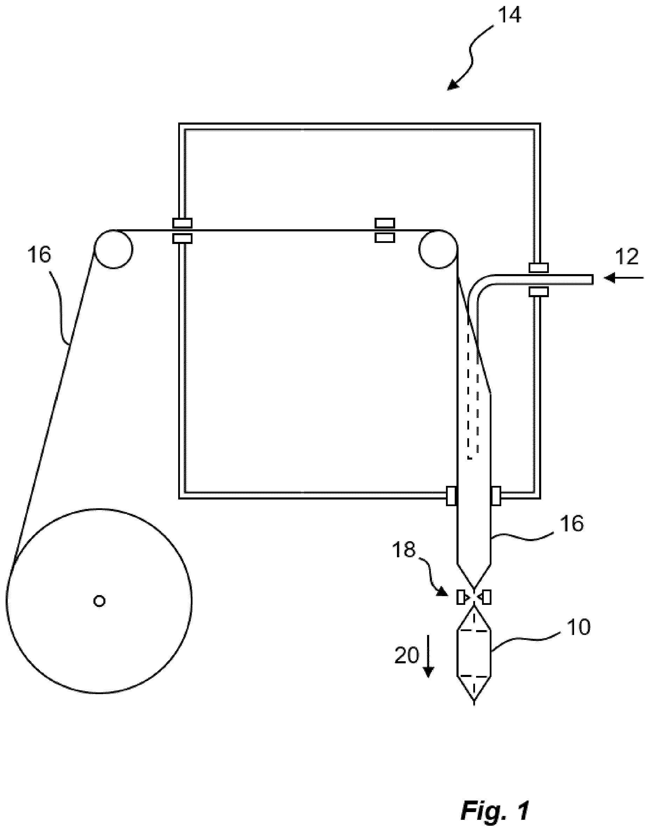

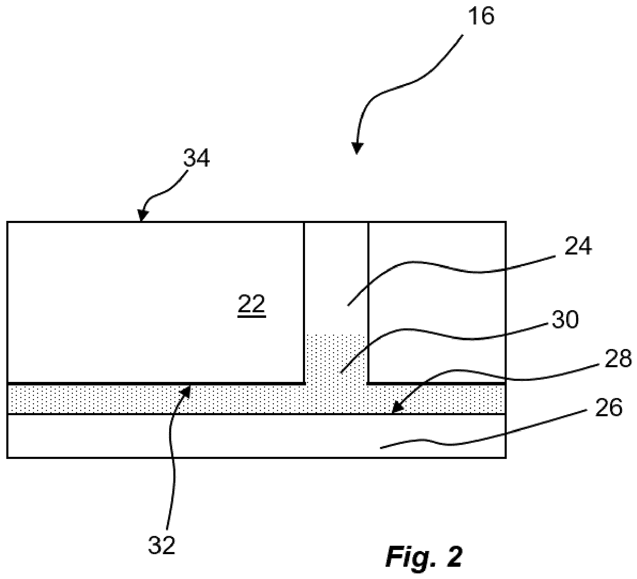

With reference to Fig. 1 an embodiment of a packaging container 10 for a liquid food product 12 is illustrated. For example, a not further specified packaging container producing machine 14 may deliver a laminated packaging material 16 (see also Figs. 2-4), from which the packaging container 10 can be made. The packaging container 10 can exemplarily be made by filling in the liquid food product 12 and then cutting off and sealing the laminated packaging material 16 by a respective cutting and sealing means 18. The scope of the present disclosure covers a packaging container 10, however not according to the claimed invention, formed in this manner from a laminated packaging material 16, , also not according to the claimed invention, as further described with reference to Figs. 2-4.

For the purpose of further describing the present invention, a machine direction 20 is defined in Fig. 1, which reference will be made to in the following figures. The machine direction 20 refers to the fact that the laminated packaging material 16 is normally manufactured in a flow process that has a material feed direction, which is the machine direction 20 in other words.

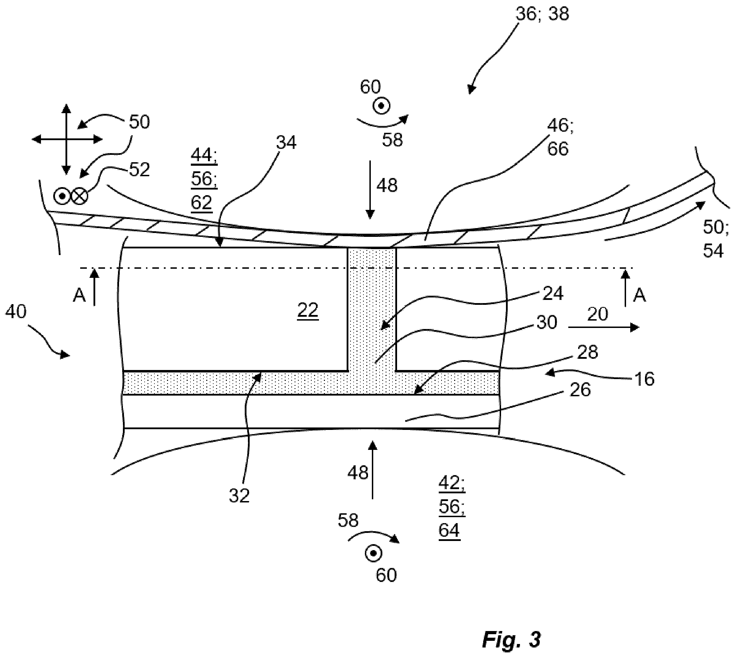

Fig. 2 shows the laminated packaging material 16, not according to the claimed invention, in more detail. The laminated packaging material 16 comprises a bulk layer 22 of paper or paperboard or other cellulose-based material. At least one through hole 24 is provided in the bulk layer 22. The bulk layer 22 is joined with a substrate layer 26, of which a lamination side 28 comprises an adhesive 30 that bonds the substrate layer 26 to a lamination side 32 of the bulk layer 22. The adhesive 30 is, merely as one example, a polymer solution applied to the lamination side 28 that has already dried out in the state of the laminated packaging material 16 illustrated in Fig. 2. It shall be noted that the material of the substrate layer 26 can also provide adhesive properties itself, for example if provided in the form of a molten polymer material. If the substrate layer 26 provides adhesive properties itself, the adhesive 30 not necessarily has to be applied to the lamination side 28 in addition. As can be seen, the adhesive 30 or in other embodiments the material of the substrate layer 26, respectively, has entered the through hole 24 to some extent. This may be the result of a lamination pressure 48 (see Fig. 3) applied to the bulk layer 22 and the substrate layer 26 for joining them. For example, as long as the adhesive 30 is not yet dried out, such a lamination pressure 48 may cause the adhesive 30 to rise in the through hole 24 and reach a side 34 of the bulk layer 22, which is opposite its lamination side 32 (compare Fig. 3). This is however not desired. When the lamination pressure 48 is reduced, a height level of the adhesive 30 in the through hole 24 sinks again and may lead to the illustrated structural characteristics. This sinking effect can be enhanced, when the adhesive 30 is drying out, which may lead to a volume of said adhesive 30 shrinking even further. The inventive laminated packaging material 16 is produced in an inventive method as described below.

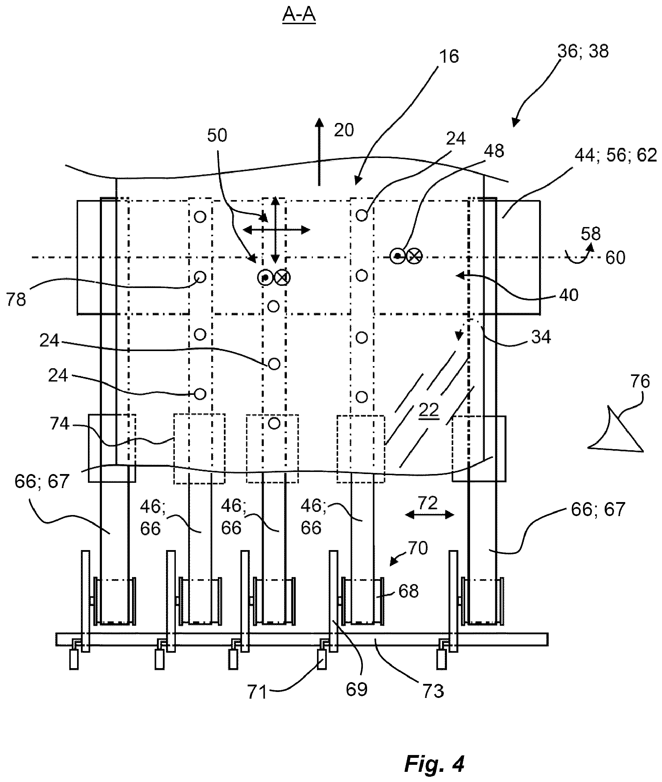

Fig. 3 schematically shows the inventive method of manufacturing the laminated packaging material 16 with reference to an inventive device 36 (also compare Figs. 4-6) for manufacturing the laminated packaging material 16. In Fig. 3, a lamination unit 38 of said device 36 is schematically illustrated. The method of the invention essentially comprises the following steps:
In a first step, the bulk layer 22 is provided, that comprises the at least one through hole 24.
In a second step, the substrate layer 26 is provided, featuring the adhesive 30 formed by or applied to the lamination side 28 thereof.
In a third step, the bulk layer 22 and the substrate layer 26 are positioned so that the adhesive 30 is facing the lamination side 32 of the bulk layer 22 and with said substrate layer 26 being arranged in front of the at least one through hole 24.

It shall be understood, that these steps can be executed in any sequence, as long as the at the end of step three the adhesive 30 is facing the lamination side 32 of the bulk layer 22 and the substrate layer 26 is arranged in front of the at least one through hole 24. These three steps may be carried out before the respective components are introduced to a lamination cavity 40 of the lamination unit 38 or inside said lamination unit 38. The bulk layer 22 and the substrate layer 26 may be introduced to the lamination unit 38 without contacting each other or already in contact with each other, which means for example pre-joined but not pressed together, respectively.

Further essentially, in a fourth step, the bulk layer 22 and the substrate layer 26 are joined in the lamination cavity 40, which is shown in Fig. 3. The bulk layer 22 and the substrate layer 26 preferably enter the lamination unit 38 in a machine direction 20 of the inventive device 36, which is however not essential and merely serves better illustration of a preferable manner of executing the inventive method. Said machine direction 20 of the inventive device 36 may coincide with the machine direction 20 of the packaging container producing machine 14 shown in Fig. 1, so the same reference sign is used to simplify the present description. Said packaging container producing machine 14 may also be combined with the inventive device 36.

Further essentially, the lamination unit 38 comprises a first lamination means 42 and a second lamination means 44. The substrate layer 26 and the bulk layer 22 are arranged between said first 42 and second 44 lamination means. Between the second lamination means 44 and the bulk layer 22 at least one non-adhesive lamination means 46 is provided. By the described arrangement, the respective components are kinematically arranged in the following sequence: the second lamination means 44, the at least one non-adhesive lamination means 46, the bulk layer 22, the adhesive 30 or the adhesive lamination side 28 of the substrate layer 26, the substrate layer 26 and the first lamination means 42. Said first 42 and second 44 lamination means are creating a lamination pressure 48 between them and are thereby joining the bulk layer 22 and the substrate layer 26. The lamination pressure 48 may cause the adhesive 30 (or in some embodiments the material of the lamination side 28) to rise in the through hole 24. However, due to the at least one non-adhesive lamination means 46, the through hole 24 is properly sealed on the side 34 of the bulk layer 22 opposite its lamination side 32.

According to the invention, a position 50 of said at least one non-adhesive lamination means 46 is controlled, so that the at least one through hole 24 is covered by the at least one non-adhesive lamination means 46, at least as long as the lamination pressure 48 is imposed on the at least one trough hole 24. Alternatively, or in combination, a position of the bulk layer 22 is controlled so that the at least one through hole 24 is covered by the at least one non-adhesive lamination means 46, at least as long as the lamination pressure 48 is imposed on the at least one trough hole 24.

Thus it is assured, that the through hole 24 is always properly sealed on the side 34 of the bulk layer 22, even if the different components involved in the method of the invention are changing their relative position.

In the following some optional but preferred embodiments of the inventive method and the inventive device 36 are described in further detail. First, it shall be noted that the bulk layer 22 and the substrate layer 26 are generally joined in a lamination process, which may however be embodied in various ways, for example as a dry lamination process or wet lamination process. Preferably, the joining may be done in a dispersion and/or wet lamination process.

In the illustrated example, the method of the invention is run as a continuous or discontinuous flow process in the machine direction 20, wherein the position 50 of the non-adhesive lamination means 46 is at least controlled in a direction 52 transverse the machine direction 20. The relative position of the non-adhesive lamination means 46 and the bulk layer 22 may also be controlled along the machine direction 20, for example by controlling a speed 54 of the non-adhesive lamination means 46. It may also be controlled in a vertical direction, for example parallel the lamination pressure 48 as illustrated in Fig. 3.

Preferably, each of the first 42 and second 44 lamination means comprises a lamination roller 56. Said lamination rollers 56 may rotate 58, preferably to convey the laminated packaging material 16 in the machine direction 20. Said lamination rollers 56 may preferably transmit the lamination pressure 48 and may be driven or thermally controlled according to the requirements of the process.

The position 50 of the non-adhesive lamination means 46 may at least be controlled in a direction 52 parallel to rotating axes 60 of said lamination rollers 56. The same applies if correct positioning is obtained by shifting the position of the bulk layer 22.

Preferably, one lamination roller 56 may be a nip roller 62 and another lamination roller 56 may be a chilled roller 64.

The non-adhesive lamination means 46 preferably comprises a belt 66 being non-adhesive, even more preferred made of TEFLON ^{®}, which is guided over the lamination roller 56 comprised by the second lamination means 44.

In the following, additional reference is made to Fig. 4, wherein preferred embodiments of the inventive method and the inventive device 36 are shown, according to a view A-A defined by cutting line A in Fig. 3.

In this view A-A, the lamination cavity 40 can be seen from below, which means with a view directed to an inside of the partwise cut bulk layer 22 and on an inside of its side 34 opposite the lamination side 32 of the bulk layer 22.

As can be seen in Fig. 4, the bulk layer 22 preferably comprises a plurality of through holes 24, from which for the sake of clarity only some are marked by reference signs 24 in Fig. 4.

Further preferred, a plurality of non-adhesive lamination means 46 is used and comprised by the inventive device 36, respectively. All of said non-adhesive lamination means 46 are kinematically arranged between the second lamination means 44 and the bulk layer 22, according to the foregoing description, preferably.

The position 50 of each non-adhesive lamination means 46 is preferably controlled so that each non-adhesive lamination means 46 covers a trough hole 24 at the respective position 50, at least as long as the lamination pressure 48 is imposed on the respective trough hole 24. Alternatively, or in combination, the position of the bulk layer 22 is controlled. As the different through holes 24 are not necessarily exposed to the lamination pressure 48 at the same time, it is clear that the position 50 of each non-adhesive lamination means 46 is preferably controlled independently.

As stated above, the non-adhesive lamination means 46 are preferably comprising belts 66 and that are preferably guided over the lamination roller 56 of the second lamination means 44. The belts 66 may also be guided or driven by one or more additional rollers 68. Preferably, there are eight such belts 66 arranged next to each along the rotating axes 60 of said lamination rollers 56, of which for the sake of clarity in the illustration only some are shown and referred to by a reference sign. This may likewise apply to other features repeatedly comprised by the device 36 and therefore only shown exemplarily in the figures.

Preferably, each of the eight belts 66 is moveable in a range of 30 cm along the rotating axes 60. Preferably, the two outermost belts 67 feature a larger width than the other belts 66 arranged between them, which means the intermediate belts are narrower than the edge belts 67, respectively.

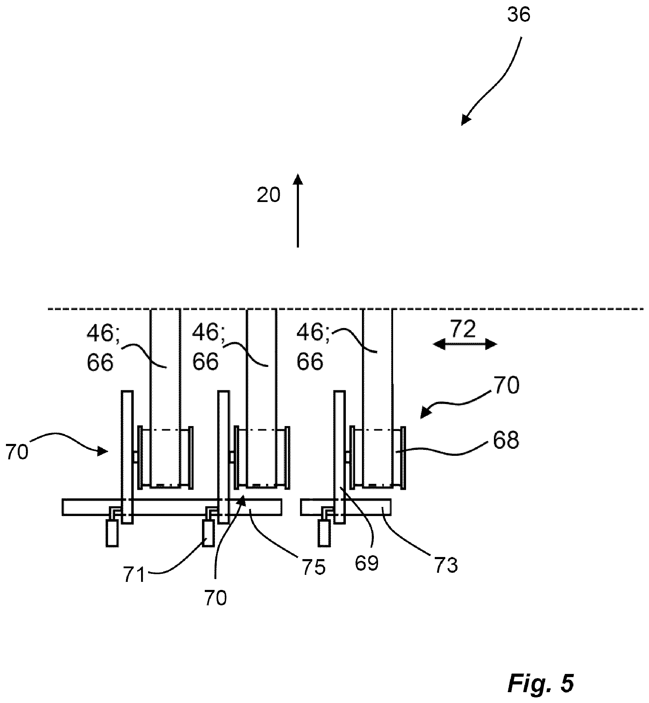

Preferably, the position 50 of each belt 66 in the direction parallel the rotating axes 60 of said lamination rollers 56 is controlled by an actuated guiding member 70 that imposes a positioning force 72 on the belt 66 in that direction. This can be seen in Fig. 4 and additionally in Fig. 5, where it is exemplarily shown for the belt 66 on the lower right side. Preferably, the actuated guiding member 70 may have at least one or more guiding rollers 68, carried on an individual support 69, for each of the belts 66. Preferably, this support 69 and so the actuated guiding member 70, is equipped with a dedicated motor 71 to be driven in the direction of the positioning force 72 and/or transverse the direction of the positioning force 72. All guiding members 70 may individually be driven in the direction of the positioning force 72 on a single slide or track 73, as exemplarily shown in Fig. 4.

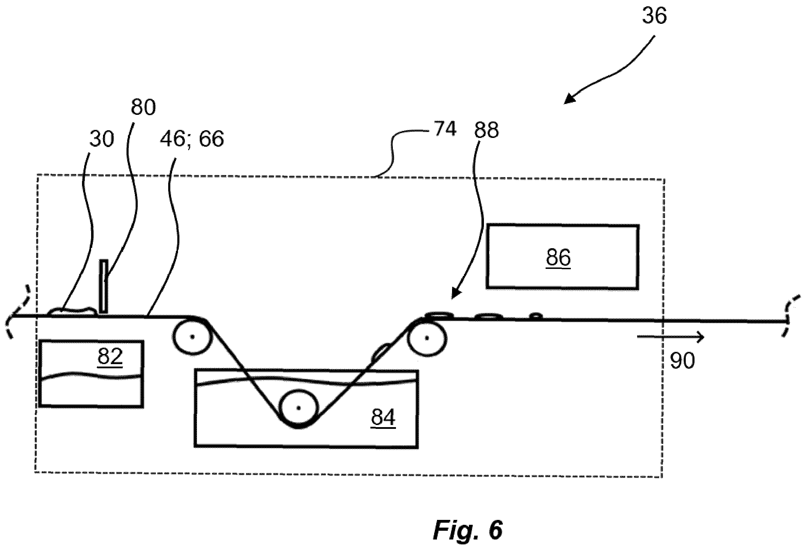

The non-adhesive lamination means 46 is preferably cleaned by a cleaning device 74 (also see Fig. 6) before and/or after having contacted the through hole 24.

Preferably, said cleaning device 74 is arranged at a location where the non-adhesive lamination means 46, for example the belt 66, has passed the first 42 and second 44 lamination means. In one embodiment, the cleaning device 74 is located behind the nip roller 62 where the belt 66 exits a nip defined by the nip roller 62.

Said cleaning device 74 may be integrated with the actuated guiding member 70 or with another suitable component of the device 36. It may also be provided as a separate unit. Such an exemplary cleaning device 74 embodied as a separate unit is illustrated in Fig. 6 and will be described further down.

Further looking at Fig. 4, to significantly improve the control of the relative position between the non-adhesive lamination means 46 and the bulk layer 22, there may be a sensor 76. The sensor 76 may detect a position 78 of the through hole(s) 24 on the bulk layer 22, said position 78 being exemplarily shown in the upper left of Fig. 4. The position 50 of the non-adhesive lamination means 46 may then be controlled based on the detected position 78 of the through hole 24. Correct alignment may also be achieved by shifting the position of the bulk layer 22 relative the non-adhesive lamination means 46.

It shall be understood that, after joining the bulk layer 22 and the substrate layer 26, the laminated packaging material 16 may be led via one or more subsequent rollers (not shown) that may also comprise a non-adhesive lamination means 46 to cover the through hole 24, as long as said subsequent roller is in contact with the through hole 24. The subsequent roller and the respective non-adhesive lamination means 46 may comprise one or more features described in the present disclosure and may, but does not necessarily have to, enable a lamination function. For example, the subsequent roller may serve the purpose of cooling, storing or conveying the laminated packaging material 16.

Fig. 5 shows an alternative embodiment of the device 36 shown in Fig. 4, in particular with regard to a different design of the slide 73, 75. Therefore, only the part of the device 36 featuring the guiding members 70 is shown in Fig. 5 and the upper part of the device is cut-off in the illustration.

As can be seen, there may be more than one slide or track 73, 75. A slide 75 may carry a group of guiding members 70 and belts 66, respectively. It is also possible, that there are more than one slides or tracks 73, 75, each of them carrying one guiding member 70 and belt 66, respectively, as exemplarily shown at slide 73.

Now turning to Fig. 6, there is an embodiment of a cleaning device 74 shown that is provided as a separate unit. In sections, an exemplary belt 66 is illustrated as the non-adhesive lamination means 46 that may just have passed the nip roller 62. As can be seen, in that situation residual adhesive 30 may be present on the belt 66. To remove the residual adhesive 30, the cleaning device 74 may have a scraper 80 or similar structure to scrape off any excess adhesive 30 that may be left on the belt 66.

There may be a collection container 82 to collect such excess adhesive 30, in particular scraped off adhesive 30. Further, the belt 66 may be exposed to a cleaning bath 84, for example be dipped into said cleaning bath 84. The cleaning bath 84 preferably comprises water and alcohol. Mostly preferred, the cleaning bath 84 is applied after the scraper 80 has been used.

After the cleaning bath 84, the belt 66 is dried, which is preferably achieved by suitable heat treatment means 86. As illustrated, left over liquids 88 are thus removed, before the belt 66 is led back to the lamination process, as indicated by movement direction 90. Based on that, it is particularly preferred to combine the cleaning device 74 with a wet lamination process.

Generally, the cleaning device 74 may be embodied in various ways, as long as it assures that any impurity or unavoidable residua of adhesive material 30 applied to the non-adhesive lamination means 46 is removed before the non-adhesive lamination means 46 is again brought in contact with the bulk layer 22 and the second lamination means 44.

From the description above follows that, although various embodiments of the invention have been described and shown, the invention is not restricted thereto, but may also be embodied in other ways within the scope of the subject-matter defined in the following claims.

## Claims

1. Method of manufacturing a laminated packaging material (16), from which a packaging container (10) for packaging of liquid food products (12) can be formed, the method comprising the following steps:
- Providing a bulk layer (22) of paper or paperboard or other cellulose-based material with at least one through hole (24);
- Providing a substrate layer (26) and an adhesive (30) formed by or applied to a lamination side (28) thereof;
- Positioning the bulk layer (22) and the substrate layer (26) so that the adhesive (30) is facing a lamination side (32) of the bulk layer (22) and with said substrate layer (26) being arranged in front of the at least one through hole (24);
- Joining the bulk layer (22) and the substrate layer (26) in a lamination unit (38), wherein a first lamination means (42), the substrate layer (26), the bulk layer (22) and a second lamination means (44) are kinematically arranged in the enumerate sequence and a lamination pressure (48) is created between the first and second lamination means (42; 44), and wherein at least one non-adhesive lamination means (46) is kinematically arranged between the second lamination means (44) and the bulk layer (22),
wherein a position of the bulk layer (22) and/or a position (50) of said at least one non-adhesive lamination means (46) is controlled so that the at least one through hole (24) is covered by the at least one non-adhesive lamination means (46), at least as long as the lamination pressure (48) is imposed on the at least one trough hole (24);
wherein the non-adhesive lamination means (46) is cleaned by a cleaning device (74) before and/or after having contacted the through hole (24).

2. Method according to any of the preceding claims, being a continuous or discontinuous flow process being run in a machine direction (20), and wherein the position of the bulk layer (22) and/or the position (50) of the non-adhesive lamination means (46) is at least controlled in a direction (52) transverse the machine direction (20).

3. Method according to any of the preceding claims, wherein the non-adhesive lamination means (46) is cleaned by the cleaning device (74) after the non-adhesive lamination means (46) has passed the first and second lamination means (42, 44).

4. Method according to any of the preceding claims, wherein any excess adhesive that may be left on the non-adhesive lamination means (46) is scraped off by a scraper (80) of the cleaning device (74).

5. Method according to claim 4, wherein the excess adhesive is collected to a collection container (82) of the cleaning device (74).

6. Method according to any of the preceding claims, wherein the non-adhesive lamination means (46) is exposed to a cleaning bath (84).

7. Method according to claim 6, wherein the non-adhesive lamination means (46) is dried after the cleaning bath (84).

8. Device (36) for manufacturing a laminated packaging material (16), from which a packaging container (10) for packaging of liquid food products (12) can be formed, the device (36) comprising a lamination unit (38) configured to receive a bulk layer (22) with at least one through hole (24) and a substrate layer (26) with an adhesive (30) formed by or applied to a lamination side (28) thereof, wherein said lamination unit (38) comprises a first lamination means (42) and a second lamination means (44) configured to form a lamination cavity (40) there between and to impose a lamination pressure (48) on the bulk layer (22) and the substrate layer (26), if said layers (22; 26) are introduced to said lamination cavity (40), and wherein the lamination unit (38) further comprises at least one non-adhesive lamination means (46) kinematically arranged between the second lamination means (44) and the bulk layer (22), if introduced to the lamination cavity (40), wherein a position of the bulk layer (22) and/or a position (50) of said at least one non-adhesive lamination means (46) is controllable so that the at least one through hole (24) is covered by the at least one non-adhesive lamination means (46), at least as long as the lamination pressure (48) is imposed on the at least one trough hole (24), and the device (36) comprises a cleaning device (74) which is configured to clean the non-adhesive lamination means (46) before and/or after having contacted the through hole (24).

9. Device (36) according to claim 8, being adapted and configurable to execute a method according to any of the claims 1 to 7.

10. Device (36) according to claim 8 or 9 comprising a sensor (76) configurable to detect a position (78) of the through hole (24) on the bulk layer (22), and wherein the position of the bulk layer (22) and/or the position (50) of the non-adhesive lamination means (46) is controllable based on the detected position (78) of the through hole (24).

11. Device (36) according to any of the claims 8 to 10 wherein the device (36) is configured to manufacture the laminated packaging material (16) in a continuous or discontinuous flow process being run in a machine direction (20), and wherein the position of the bulk layer (22) and/or the position (50) of the non-adhesive lamination means (46) is at least controllable in a direction (52) transverse the machine direction (20).

12. Device (36) according to any of the claims 8 to 11, wherein the cleaning device (74) is arranged at a location where the non-adhesive lamination means (46) has passed the first and second lamination means (42; 44).

13. Device (36) according to any of the claims 8 to 12, wherein the cleaning device (74) is located behind one of the first and second lamination means (42; 44) where the non-adhesive lamination means (46) exits from between the first and second lamination means (42; 44).

14. Device (36) according to any of the claims 8 to 13, wherein the cleaning device (74) has a scraper (80) to scrape off any excess adhesive that may be left on the non-adhesive lamination means (46).

15. Device (36) according to claim 14, wherein the cleaning device (74) has a collection container (82) to collect the excess adhesive.

16. Device (36) according to any of the claims 8 to 15, wherein the cleaning device (74) has a cleaning bath (84) where the non-adhesive lamination means (46) is exposed to.

17. Device (36) according to claim 16, wherein the cleaning device (74) has a heat treatment means (86) where the non-adhesive lamination means (46) is dried after the cleaning bath (84).

## Patentansprüche

1. Verfahren zur Herstellung eines laminierten Verpackungsmaterials (16), aus dem ein Verpackungsbehälter (10) zum Verpacken von flüssigen Lebensmittelprodukten (12) gebildet werden kann, wobei das Verfahren die folgenden Schritte umfasst:
- Bereitstellen einer Volumenschicht (22) aus Papier oder Pappe oder anderem Material auf Cellulosebasis mit wenigstens einem Durchgangsloch (24);
- Bereitstellen einer Substratschicht (26) und eines Klebstoffs (30), der von einer Laminationsseite (28) davon gebildet wird oder darauf aufgebracht ist;
- Positionieren der Volumenschicht (22) und der Substratschicht (26), so dass der Klebstoff (30) einer Laminationsseite (32) der Volumenschicht (22) zugewandt ist, und wobei die Substratschicht (26) vor dem wenigstens einen Durchgangsloch (24) angeordnet ist;
- Verbinden der Volumenschicht (22) und der Substratschicht (26) in einer Laminationseinheit (38), wobei ein erstes Laminationsmittel (42), die Substratschicht (26), die Volumenschicht (22) und ein zweites Laminationsmittel (44) kinematisch in der aufgeführten Reihenfolge angeordnet werden und ein Laminationsdruck (48) zwischen dem ersten und dem zweiten Laminationsmittel (42; 44) erzeugt wird, und wobei wenigstens ein nichtklebendes Laminationsmittel (46) kinematisch zwischen dem zweiten Laminationsmittel (44) und der Volumenschicht (22) angeordnet ist,
wobei eine Position der Volumenschicht (22) und/oder eine Position (50) des wenigstens einen nichtklebenden Laminationsmittels (46) so gesteuert wird, dass das wenigstens eine Durchgangsloch (24) durch das wenigstens eine nichtklebende Laminationsmittel (46) abgedeckt wird, wenigstens so lange wie der Laminationsdruck (48) auf das wenigstens eine Durchgangsloch (24) ausgeübt wird;
wobei das nichtklebende Laminationsmittel (46) durch eine Reinigungsvorrichtung (74) gereinigt wird, bevor und/oder nachdem es mit dem Durchgangsloch (24) Kontakt gebildet hat.

2. Verfahren nach einem der vorstehenden Ansprüche, das ein Verfahren mit kontinuierlichem oder diskontinuierlichem Fluss ist, das in einer Maschinenrichtung (20) läuft, und wobei die Position der Volumenschicht (22) und/oder die Position (50) des nichtklebenden Laminationsmittels (46) wenigstens in einer Richtung (52) quer zu der Maschinenrichtung (20) gesteuert wird.

3. Verfahren nach einem der vorstehenden Ansprüche, wobei das nichtklebende Laminationsmittel (46) durch die Reinigungsvorrichtung (74) gereinigt wird, nachdem das nichtklebende Laminationsmittel (46) das erste und das zweite Laminationsmittel (42, 44) passiert hat.

4. Verfahren nach einem der vorstehenden Ansprüche, wobei jeglicher überschüssiger Klebstoff, der auf dem nichtklebenden Laminationsmittel (46) zurückgeblieben sein kann, durch einen Schaber (80) der Reinigungsvorrichtung (74) abgeschabt wird.

5. Verfahren nach Anspruch 4, wobei der überschüssige Klebstoff an einem Sammelbehälter (82) der Reinigungsvorrichtung (74) gesammelt wird.

6. Verfahren nach einem der vorstehenden Ansprüche, wobei das nichtklebende Laminationsmittel (46) gegenüber einem Reinigungsbad (84) exponiert wird.

7. Verfahren nach Anspruch 6, wobei das nichtklebende Laminationsmittel (46) nach dem Reinigungsbad (84) getrocknet wird.

8. Vorrichtung (36) zur Herstellung eines laminierten Verpackungsmaterials (16), aus dem ein Verpackungsbehälter (10) zum Verpacken von flüssigen Lebensmittelprodukten (12) gebildet werden kann, wobei die Vorrichtung (36) eine Laminationseinheit (38) umfasst, die dafür gestaltet ist, eine Volumenschicht (22) mit wenigstens einem Durchgangsloch (24) und eine Substratschicht (26) mit einem Klebstoff (30), der von einer Laminationsseite (28) davon gebildet oder darauf aufgebracht ist, aufzunehmen, wobei die Laminationseinheit (38) ein erstes Laminationsmittel (42) und ein zweites Laminationsmittel (44) umfasst, die dafür gestaltet sind, einen Laminationshohlraum (40) dazwischen zu bilden und einen Laminationsdruck (48) auf die Volumenschicht (22) und die Substratschicht (26) aufzubringen, wenn die Schichten (22; 26) in den Laminationshohlraum (40) eingeführt werden, und wobei die Laminationseinheit (38) ferner wenigstens ein nichtklebendes Laminationsmittel (46) umfasst, das kinematisch zwischen dem zweiten Laminationsmittel (44) und der Volumenschicht (22) angeordnet wird, wenn es in den Laminationshohlraum (40) eingeführt wird, wobei eine Position der Volumenschicht (22) und/oder eine Position (50) des wenigstens einen nichtklebenden Laminationsmittels (46) steuerbar ist, so dass das wenigstens eine Durchgangsloch (24) wenigstens so lange, wie der Laminationsdruck (48) auf das wenigstens eine Durchgangsloch (24) ausgeübt wird, von dem wenigstens einen nichtklebenden Laminationsmittel (46) bedeckt wird, und die Vorrichtung (36) eine Reinigungsvorrichtung (74) umfasst, die dafür gestaltet ist, das nichtklebende Laminationsmittel (46) vor und/oder nach dem Kontakt mit dem Durchgangslochs (24) zu reinigen.

9. Vorrichtung (36) nach Anspruch 8, dazu ausgelegt und gestaltbar, ein Verfahren nach einem der Ansprüche 1 bis 7 auszuführen.

10. Vorrichtung (36) nach Anspruch 8 oder 9, umfassend einen Sensor (76), der konfigurierbar ist, eine Position (78) des Durchgangslochs (24) auf der Volumenschicht (22) zu erfassen, und wobei die Position der Volumenschicht (22) und/oder die Position (50) des nichtklebenden Laminationsmittels (46) auf der Grundlage der erfassten Position (78) des Durchgangslochs (24) steuerbar ist.

11. Vorrichtung (36) nach einem der Ansprüche 8 bis 10, wobei die Vorrichtung (36) dafür gestaltet ist, das laminierte Verpackungsmaterial (16) durch ein Verfahren mit kontinuierlichem oder diskontinuierlichem Fluss herzustellen, das in einer Maschinenrichtung (20) läuft, und wobei die Position der Volumenschicht (22) und/oder die Position (50) des nichtklebenden Laminationsmittels (46) wenigstens in einer Richtung (52) quer zu der Maschinenrichtung (20) steuerbar ist.

12. Vorrichtung (36) nach einem der Ansprüche 8 bis 11, wobei die Reinigungsvorrichtung (74) an einer Stelle angeordnet ist, an der das nichtklebende Laminationsmittel (46) das erste und das zweite Laminationsmittel (42; 44) passiert hat.

13. Vorrichtung (36) nach einem der Ansprüche 8 bis 12, wobei die Reinigungsvorrichtung (74) hinter einem von dem ersten und dem zweiten Laminationsmittel (42; 44) angeordnet ist, wo das nichtklebende Laminationsmittel (46) zwischen dem ersten und zweiten Laminationsmittel (42; 44) austritt.

14. Vorrichtung (36) nach einem der Ansprüche 8 bis 13, wobei die Reinigungsvorrichtung (74) einen Schaber (80) aufweist, um jeglichen überschüssigen Klebstoff abzuschaben, der auf dem nichtklebenden Laminationsmittel (46) zurückgeblieben sein kann.

15. Vorrichtung (36) nach Anspruch 14, wobei die Reinigungsvorrichtung (74) einen Sammelbehälter (82) zum Sammeln des überschüssigen Klebstoffs aufweist.

16. Vorrichtung (36) nach einem der Ansprüche 8 bis 15, wobei die Reinigungsvorrichtung (74) ein Reinigungsbad (84) aufweist, gegenüber dem das nichtklebende Laminationsmittel (46) exponiert wird.

17. Vorrichtung (36) nach Anspruch 16, wobei die Reinigungsvorrichtung (74) eine Wärmebehandlungseinrichtung (86) aufweist, an der das nichtklebende Laminationsmittel (46) nach dem Reinigungsbad (84) getrocknet wird.

## Revendications

1. Procédé de fabrication d'un matériau d'emballage stratifié (16), à partir duquel un contenant d'emballage (10) pour l'emballage de produits alimentaires liquides (12) peut être formé, le procédé comprenant les étapes suivantes :
- la fourniture d'au moins un trou traversant (24) dans une couche de masse (22) de papier ou de carton ou d'un autre matériau à base de cellulose ;
- la fourniture d'une couche de substrat (26) et d'un adhésif (30) formé par ou appliqué sur une face de stratification (28) de celle-ci ;
- le positionnement de la couche de masse (22) et de la couche de substrat (26) de sorte que l'adhésif (30) soit tourné vers une face de stratification (32) de la couche de masse (22) et ladite couche de substrat (26) étant agencée devant l'au moins un trou traversant (24) ;
- l'assemblage de la couche de masse (22) et de la couche de substrat (26) dans une unité de stratification (38), dans lequel un premier moyen de stratification (42), la couche de substrat (26), la couche de masse (22) et un second moyen de stratification (44) sont agencés cinématiquement dans l'ordre d'énumération et une pression de stratification (48) est créée entre les premier et second moyens de stratification (42 ; 44), et dans lequel au moins un moyen de stratification non adhésif (46) est agencé cinématiquement entre le second moyen de stratification (44) et la couche de masse (22),
dans lequel une position de la couche de masse (22) et/ou une position (50) dudit au moins un moyen de stratification non adhésif (46) sont contrôlées de sorte que l'au moins un trou traversant (24) soit recouvert par l'au moins un moyen de stratification non adhésif (46), au moins tant que la pression de stratification (48) est imposée à l'au moins un trou traversant (24) ;
dans lequel le moyen de stratification non adhésif (46) est nettoyé par un dispositif de nettoyage (74) avant et/ou après avoir été en contact avec le trou traversant (24).

2. Procédé selon l'une quelconque des revendications précédentes, étant un processus à flux continu ou discontinu se déroulant dans le sens machine (20), et dans lequel la position de la couche de masse (22) et/ou la position (50) du moyen de stratification non adhésif (46) sont au moins contrôlées dans un sens (52) transversal au sens machine (20).

3. Procédé selon l'une quelconque des revendications précédentes, dans lequel le moyen de stratification non adhésif (46) est nettoyé par le dispositif de nettoyage (74) après que le moyen de stratification non adhésif (46) a passé les premier et second moyens de stratification (42, 44).

4. Procédé selon l'une quelconque des revendications précédentes, dans lequel tout excédent d'adhésif qui peut être laissé sur le moyen de stratification non adhésif (46) est raclé par un racloir (80) du dispositif de nettoyage (74).

5. Procédé selon la revendication 4, dans lequel l'adhésif en excédent est recueilli dans un contenant de collecte (82) du dispositif de nettoyage (74).

6. Procédé selon l'une quelconque des revendications précédentes, dans lequel le moyen de stratification non adhésif (46) est exposé à un bain de nettoyage (84).

7. Procédé selon la revendication 6, dans lequel le moyen de stratification non adhésif (46) est séché après le bain de nettoyage (84).

8. Dispositif (36) pour la fabrication d'un matériau d'emballage stratifié (16), à partir duquel un contenant d'emballage (10) pour l'emballage de produits alimentaires liquides (12) peut être formé, le dispositif (36) comprenant une unité de stratification (38) configurée pour recevoir une couche de masse (22) dotée d'au moins un trou traversant (24) et une couche de substrat (26) dotée d'un adhésif (30) formé par ou appliqué sur une face de stratification (28) de celui-ci, dans lequel ladite unité de stratification (38) comprend un premier moyen de stratification (42) et un second moyen de stratification (44) configurés pour former une cavité de stratification (40) entre les deux et pour imposer une pression de stratification (48) à la couche de masse (22) et la couche de substrat (26), si lesdites couches (22 ; 26) sont introduites dans ladite cavité de stratification (40), et dans lequel l'unité de stratification (38) comprend en outre au moins un moyen de stratification non adhésif (46) agencé cinématiquement entre le second moyen de stratification (44) et la couche de masse (22), si elle est introduite dans la cavité de stratification (40), dans lequel une position de la couche de masse (22) et/ou une position (50) dudit au moins un moyen de stratification non adhésif (46) sont contrôlables de sorte que l'au moins un trou traversant (24) soit recouvert par l'au moins un moyen de stratification non adhésif (46), au moins tant que la pression de stratification (48) est imposée à l'au moins un trou traversant (24), et le dispositif (36) comprend un dispositif de nettoyage (74) qui est configuré pour nettoyer le moyen de stratification non adhésif (46) avant et/ou après avoir été en contact avec le trou traversant (24).

9. Dispositif (36) selon la revendication 8, étant conçu et configurable pour exécuter un procédé selon l'une quelconque des revendications 1 à 7.

10. Dispositif (36) selon la revendication 8 ou 9 comprenant un capteur (76) configurable pour détecter une position (78) du trou traversant (24) sur la couche de masse (22), et dans lequel la position de la couche de masse (22) et/ou la position (50) du moyen de stratification non adhésif (46) sont contrôlables sur la base de la position détectée (78) du trou traversant (24).

11. Dispositif (36) selon l'une quelconque des revendications 8 à 10 dans lequel le dispositif (36) est configuré pour fabriquer le matériau d'emballage stratifié (16) dans un processus à flux continu ou discontinu se déroulant dans le sens machine (20), et dans lequel la position de la couche de masse (22) et/ou la position (50) du moyen de stratification non adhésif (46) sont au moins contrôlables dans un sens (52) transversal au sens machine (20).

12. Dispositif (36) selon l'une quelconque des revendications 8 à 11, dans lequel le dispositif de nettoyage (74) est agencé à un emplacement où le moyen de stratification non adhésif (46) a passé les premier et second moyens de stratification (42 ; 44).

13. Dispositif (36) selon l'une quelconque des revendications 8 à 12, dans lequel le dispositif de nettoyage (74) est situé derrière l'un des premier et second moyens de stratification (42 ; 44) où le moyen de stratification non adhésif (46) sort d'entre les premier et second moyens de stratification (42 ; 44).

14. Dispositif (36) selon l'une quelconque des revendications 8 à 13, dans lequel le dispositif de nettoyage (74) a un racloir (80) pour racler tout excédent d'adhésif qui peut être laissé sur le moyen de stratification non adhésif (46).

15. Dispositif (36) selon la revendication 14, dans lequel le dispositif de nettoyage (74) comporte un contenant de collecte (82) pour collecter l'excédent d'adhésif.

16. Dispositif (36) selon l'une quelconque des revendications 8 à 15, dans lequel le dispositif de nettoyage (74) présente un bain de nettoyage (84) auquel est exposé le moyen de stratification non adhésif (46).

17. Dispositif (36) selon la revendication 16, dans lequel le dispositif de nettoyage (74) présente un moyen de traitement thermique (86) où le moyen de stratification non adhésif (46) est séché après le bain de nettoyage (84).
